# EUROPEAN PATENT APPLICATION

(11) **EP 1 627 717 A1**
(43) Date of publication of application: **22.02.2006**
(21) Application number: 05107530.7
(22) Date of filing: 16.08.2005
(51) Int. Cl.: B29C 33/04, B29C 35/04, B29D 30/06, G01M 3/26

(54) **Method and apparatus to detect leaks in expansion vessel**

(30) Priority: 18.08.2004 US 920560
(71) Applicant: THE GOODYEAR TIRE & RUBBER COMPANY, Akron, Ohio 44316-0001 (US)
(72) Inventor: Falchi, Mauro Cesar, 465000 Jacyra-Americana S.P. 13 (BR); Zangerolamo, Robinson, 465000 Sao Vito-Americana S.P. 13 (BR); Junior, Luiz Cardoso, 465000 Pq. Novo Mundo-Americana S.P. 13 (BR); Nicoletto, Joao Antonio, 465000 Sao Vito-Americana S.P. 13 (BR)
(74) Representative: Kutsch, Bernd

(57) **Abstract**

A method and a mold (10) is provided for detecting leaks in a bladder (20). The mold (10) comprises a lower platen (12) and an upper platen (14), and an inner cavity having an inflatable bladder (20) contained therein. The bladder (20) is mounted to the mold (10) via one or more mounting rings (24, 30), wherein the one or more mounting rings further comprises a vent passage (44) having a first end (22) adjacent to the bladder (20) wherein the first end (22) comprises an annular shaped groove (40). The vent passage (44) has a second end (28) in fluid communication with a valve (52). The valve (52) has a first position connected to vent, and a second position connected to a pressure measuring device. The method comprises the steps of creating a vent passage (44) in a section of the mold (10) in contact with the bladder (20) of the mold (10); venting said vent passage (44) to atmospheric pressure and during a portion of the deflation cycle, sensing the pressure in the vent passage (44).

## Description

### Field of the Invention

The invention relates to a method and an apparatus for detecting leakage in an expansion vessel, and more particularly to a method for detecting a leak in a bladder of a tire mold and to a mold for molding an article.

### Background of the Invention

Many curing devices for molded products use an expansion vessel or curing bladder. The expansion vessel or curing bladder is typically pressurized with a fluid such as steam. The fluid source causes the expansion vessel to expand, pushing the product tightly against the mold. The fluid source may be heated, so that the heat helps to cure the molded product.

Problems may occur when a leak, typically the size of a pinhole, forms in the curing bladder. In the tire industry, a bladder leak allows high temperature steam to contact the inner liner of the tire, which may result in an uncured area of the inner liner. Another possible result is the permeation of steam into the ply area of the tire that can ultimately result in the separation of the plies, and a scrap tire. Leaks in the curing bladder are one of the tire industry's leading causes of tire scrap. Further, there is typically a lag time between the formation of the leak and the discovery of the leak, resulting in a larger number of scrap tires.

One problem with prior art leak detection systems is that the leak may get trapped between the bladder and the liner when the bladder is inflated against the green tire during the cure cycle, making it difficult to detect. Further, during deflation, the leak has multiple pathways to escape, making detection difficult.

Manufacturers have attempted to limit the scrap products caused by leaks by utilizing monitoring devices to detect the leaks. However, prior art monitoring systems are generally not adequate to detect pinhole leaks, because the amount of fluid lost through the hole is very small. Further, prior art detection systems may miss detecting the leak if the leak is located between the inflated bladder and tire, resulting in a temporary seal of the leak. Still further yet, pressure sensors located in a chamber of the mold are often utilized to detect leaks. This requires the chamber to fill up with the leaking fluid before the pressure switch is activated. Thus the chamber typically has a larger volume compared to the leak volume, making detection more difficult.

Thus an improved leak detection system is desired which can detect small pinhole-size leaks and discover leaks which may be locating in the sealing zone of the inflated pressure vessel and product.

### Summary of the Invention

The invention provides in one aspect an improved method of detecting leaks in a bladder of a mold having a gaseous inflation cycle and a deflation cycle. The method comprises the steps of: creating a vent passage in a section of the mold in contact with the bladder of the mold; venting said vent passage to atmospheric pressure; and during a portion of the deflation cycle, measuring the pressure in the vent passage.

The invention provides in a second aspect a two piece mold for molding an article, the two piece mold comprising a lower platen and an upper platen, an inner cavity having an inflatable bladder contained therein, said bladder being mounted to said mold via one or more mounting rings, wherein said one or more mounting rings further comprises a vent passage having a first end adjacent to said bladder wherein said first end comprises an annular shaped groove; said vent passage having a second end in fluid communication with a valve, said valve having a first position connected to vent, and a second position connected to a pressure sensing device.

### Definitions

For ease of understanding this disclosure, the following terms are defined.
"Bead" means that part of the tire comprising an annular tensile member wrapped by ply cords and shaped, with or without other reinforcement elements such as flippers, chippers, apexes, toe guards, and chafers, to fit a design rim. The beads are associated with holding the tire to the wheel rim.
"Curing" means the process of heating or otherwise treating a rubber or plastic compound to convert it from a thermoplastic or fluid material into a solid, relatively heat-resistant state by causing cross-linking of the compound. When heating is employed, the process is called vulcanization.
"Elastomer" means a resilient material capable of recovering size and shape after deformation.
"Elastomeric article" is an article that is at least partially made from an elastomer.
"Innerliner" means the layer or layers of elastomer or other material that form the inside surface of a tubeless tire and that contain the inflating fluid within the tire.
"Pneumatic tire" means a laminated mechanical device of generally toroidal shape, usually an open torus, having beads and a tread and made of rubber, chemicals, fabric and steel or other materials. When mounted on the wheel of a motor vehicle, the tire, through its tread, provides traction and contains the fluid that sustains the vehicle load.
"Radial" and "radially" are used to mean directions toward or away from the axis of rotation of the tire.

### Brief Description of the Drawings

The invention will be described by way of example and with reference to the accompanying drawings in which:
Figure 1 is a cross-sectional view of a two piece mold shown with an inflated expansion vessel;

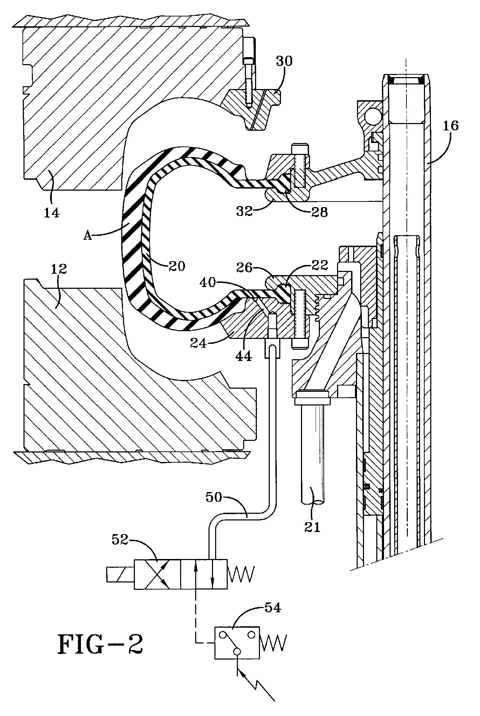

Figure 2 is a cross-sectional view of one half of the mold of Figure 1 shown during deflation of the expansion vessel;
Figure 3 is a perspective view of a MLR ring of a two piece mold;
Figure 4 is a bottom perspective view of the MLR ring of Figure 3;
Figure 5 is a cross-sectional view of the MLR ring of figure 4 in the direction 5-5; and
Figure 6 is a cross-sectional view of one half of a segmented mold.

### Detailed Description of the Invention

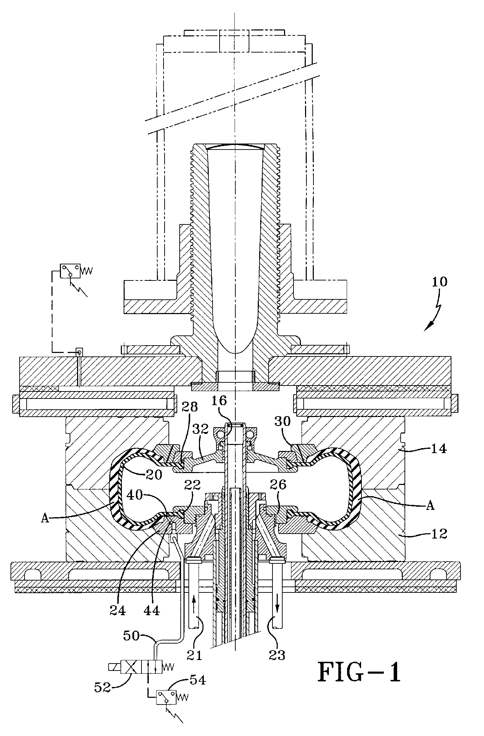

The mold illustrated in Fig. 1 is a two piece mold 10 or curing press that separates for the insertion and removal of an article A. The mold 10 includes a fixed lower platen 12, and a movable upper platen 14. Upper platen 14 is vertically movable with respect to lower platen 12 via control rod 16 by an actuating mechanism (not shown) to allow for opening and closing of the mold cavity. An elastomeric bladder or expansion vessel 20 is mounted in the mold press cavity. Bladder 20 is inflated for engagement with an article A by a pressurized, heated fluid such as steam or gaseous mixture. The heated fluid is heated to the necessary temperature prior to injection into the mold cavity. Fig. 1 illustrates bladder 20 in an inflated position pressing a green tire carcass A outwardly into engagement with the tire mold which forms the final tire configuration and tread pattern. The pressurized fluid is introduced into the expansion vessel 20 through an inlet channel 21, and it exits through an exit channel 23. The inlet channel 21 and the exit channel 23 contain valves (not shown) which work together to regulate the pressure within the bladder 20.

The bladder is secured with the mold cavity as follows. A first end 22 of the bladder 20 is clamped in place between lower lock ring 24 and lower clamp ring 26. Although not shown, lower lock ring 24 and lower clamp ring 26 may alternatively be a one piece unit, collectively called a lower mold ring. A second end 28 of the bladder 20 is likewise clamped between upper lock ring 30 and upper clamp ring 32. Although not shown, upper lock ring 30 and upper clamp ring 32 may alternatively be a one piece unit, collectively called an upper mold ring.

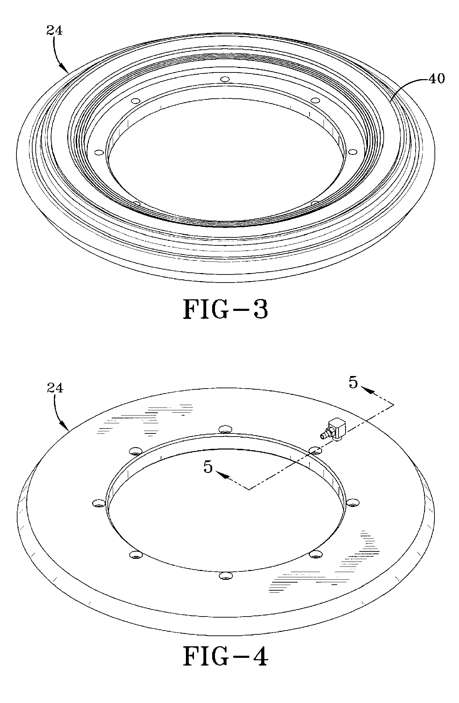

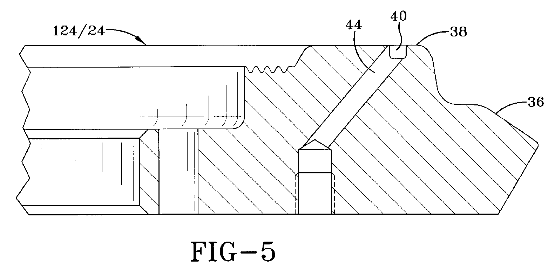

As shown in Figure 5, lower lock ring 24 includes a sloped lower wall 36 which together with an upper wall of lower clamp ring form an annular groove for securing an end of the bladder. Lower lock ring 24 further comprises an inner surface 38 which includes a groove or channel 40 thereon. The channel 40 is preferably annular as shown in Figure 3. As described in more detail below, the channel 40 is in fluid communication with any trapped fluid located between the bladder 20 and the tire A during certain periods of the mold cycle. Channel 40 is in fluid communication with vent channel 44, which provides a pathway to vent the trapped fluid out of the tire mold. Thus, at certain times in the mold cycle, the channel 40 acts as a manifold or pathway to vent the trapped fluid out of the mold.

As shown in Figure 1, vent channel 44 is connected to hose 50, which is in fluid communication with a valve 52. Valve 52 is preferably a four way valve. Valve 52 is open to atmosphere (vent) during almost all of the cure time of the mold cycle, thus allowing any trapped air between the bladder and tire a path to escape. The exhaust end of valve 52 is connected to pressure switch 54 so that when the circuit of valve 52 is closed, the channels 40, 44 are in fluid communication with pressure switch. The leak detection system as described above is preferably utilized to detect leaks during the final phase of the nitrogen gas and during the deflation time of the bladder. During this time interval of the cycle, the pressure between the tire and bladder is close to vacuum due to the evacuating of spent gasses from the mold cavity. Thus, if there is a leak in the bladder, there will be an increase in pressure which can be detected by pressure switch 54. Pressure switch is preferably set to 1.0 to 1.5 psig.

The operation of the mold cycle and leak detection thereof may now be described. At the beginning of the cycle, the uncured tire is placed into the mold 10 and the mold upper platen is lowered into position, closing the mold. After the mold 10 is closed, a pressurized fluid, usually steam, inflates the bladder 20 so that the outer surface of the bladder contacts the inner liner of the tire, pushing the tire 10 against the mold. During almost all of the mold cure time, the leak detector valve 52 is open to vent, so that any trapped air between the tire and bladder may be vented to atmosphere. During the cure phase of the mold, the pressurized fluid is contained within the expansion vessel for a predetermined period of time so that the tire may at least partially cure. In most instances, the heat source is removed prior to deflating the bladder. When steam is used as the heat source and the pressurized fluid, it is slowly released out of the bladder and is replaced by another pressurized fluid, such as nitrogen. During the last phase of the nitrogen, preferably the last three second of nitrogen, and during the deflation time, valve 52 is closed so that pressure switch 54 is in fluid communication with channels 40,44. If any bladder leaks occur, an increase in pressure will be detected by pressure switch 54.

After a predetermined time has elapsed, the pressurized fluid is released from the bladder into the exit channel 23. As a result, the bladder is deflated and is withdrawn from the cavity. Finally, the mold 16 is opened and the at least partially cured tire 10 is removed from the curing device.

In yet another embodiment of the invention, the upper lock ring 30 includes a circumferential groove connected to a channel which is in fluid communication to a pressure switch.

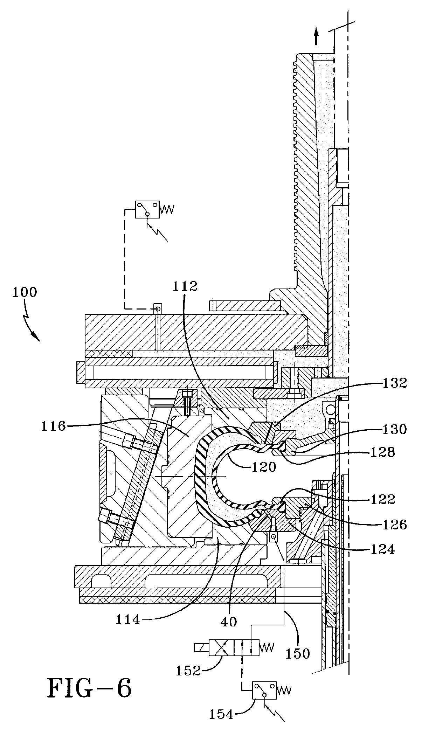

In still another embodiment of the invention, one-half of a segmented mold 100 is shown in Figure 6. The segmented mold 100 includes an upper mold plate 112, a lower mold plate 114, and a plurality of tread segments 116. A bladder 120 is secured with the mold cavity as follows. A first end 122 of the bladder 120 is clamped in place between lower lock ring 124 and lower clamp ring 126. Although not shown, lower lock ring 124 and lower clamp ring 126 may alternatively be a one piece unit, collectively called a lower mold ring. A second end 128 of the bladder 120 is likewise clamped between upper lock ring 130 and upper clamp ring 132. Although not shown, upper lock ring 130 and upper clamp ring 132 may alternatively be a one piece unit, collectively called an upper mold ring.

Like the lower lock ring of the two piece mold, lower lock ring 124 includes a sloped lower wall 36 which together with an upper wall of lower clamp ring form an annular groove for securing an end of the bladder. Lower lock ring 124 further comprises an inner surface 38 which includes a groove or channel 40 thereon. The channel 40 is preferably annular. The channel 40 is in fluid communication with any trapped fluid located between the bladder 120 and the tire A during certain periods of the mold cycle. Channel 40 is in fluid communication with vent channel 44, which provides a pathway to vent the trapped fluid out of the tire mold. Thus, at certain times in the mold cycle, the channel 40 acts as a manifold or pathway to vent the trapped fluid out of the mold. Vent channel 44 is connected to hose 150, which is in fluid communication with a valve 152. Valve 152 is preferably a four way valve. Valve 152 is open to atmosphere (vent) during almost all of the cure time of the mold cycle, thus allowing any trapped air between the bladder and tire a path to escape. The exhaust end of valve 152 is connected to pressure switch 154 so that when the circuit of valve 152 is closed, the channels 40, 44 are in fluid communication with pressure switch.

## Claims

1. A method of detecting leaks in a bladder of a mold having a gaseous inflation cycle and a deflation cycle, the method comprising the steps of:
creating a vent passage (44) in a section of the mold (10) in contact with a bladder (20) of the mold (10);
venting said vent passage (44) to atmospheric pressure;
during a portion of the deflation cycle, sensing the pressure in the vent passage (44).

2. The method of claim 1, further comprising the step of determining if the vent passage pressure is greater than 1 psig.

3. A mold for molding an article, the mold (10) comprising a lower platen (12) and an upper platen (14), an inner cavity having an inflatable bladder (20) contained therein, said bladder (20) being mounted to said mold (10) via one or more mounting rings (24, 30), wherein said one or more mounting rings further comprises a vent passage (44) having a first end (22) adjacent to said bladder (20) wherein said first end (22) comprises an annular shaped groove (40); said vent passage (44) having a second end in fluid communication with a valve (52), said valve (52) having a first position connected to vent, and a second position connected to a pressure measuring device.

4. The mold of claim 3, wherein said vent passage (44) is located in a lock ring (24, 30).

5. The mold of claim 3, wherein said vent passage (44) is located in the lower lock ring (24).

6. The mold of claim 3, wherein said vent passage (44) is located in the upper lock ring.

7. The mold of claim 3, wherein said vent passage (44) is located in the clamp ring (26, 32).

8. The mold of claim 3, wherein the vent passage (44) is located in the mold ring.

9. The mold of at least one of claims 3-8, wherein said mold (10) is a two piece tire mold or a segmented tire mold.

10. The mold of at least one of claims 3-9, wherein said vent passage (44) has a first end (22) having an annular shaped groove (40) located adjacent said bladder (20).
